# EUROPÄISCHE PATENTSCHRIFT

(11) **EP 1 366 395 B1**
(45) Veröffentlichungstag und Bekanntmachung des Hinweises auf die Patenterteilung: **23.04.2008**
(21) Anmeldenummer: 02714167.0
(22) Anmeldetag: 20.02.2002
(51) Int. Cl.: G05B 19/18

(54) **VERFAHREN UND VORRICHTUNG ZUR SPANABHEBENDEN BEARBEITUNG**
METHOD AND DEVICE FOR MACHINING
PROCEDE ET DISPOSITIF DESTINE A L'USINAGE PAR ENLEVEMENT DE COPEAUX

(30) Priorität: 03.03.2001 DE 10110386
(43) Veröffentlichungstag der Anmeldung: 03.12.2003
(73) Patentinhaber: Forschungszentrum Karlsruhe GmbH, 76133 Karlsruhe (DE)
(72) Erfinder: SCHALLER, Thomas, 76356 Weingarten (DE)
(86) Internationale Anmeldenummer: PCT/EP2002/001752
(87) Internationale Veröffentlichungsnummer: WO 2002/071166

(56) Entgegenhaltungen:
- WO-A-00/51779
- DE-A- 3 511 790
- US-A- 4 950 112
- "FUENFACHSIGES FRAESEN GROSSER WERKSTUECKE" ZWF ZEITSCHRIFT FUR WIRTSCHAFTLICHE FERTIGUNG UND AUTOMATISIERUNG, CARL HANSER VERLAG. MUNCHEN, DE, Bd. 86, Nr. 5, 1. Mai 1991 (1991-05-01), Seite 220 XP000204783 ISSN: 0947-0085

## Beschreibung

Die Erfindung betrifft ein Verfahren zur spanabhebenden Bearbeitung gemäß Anspruch 1 und eine Vorrichtung gemäß Anspruch 6.

In der Praxis stellt die spanabhebende 5-Seiten-Bearbeitung von dreidimensionalen Werkstücken mit CNC-Bearbeitungsmaschinen ein in vielen Bereichen der Produktionstechnik etabliertes Bearbeitungsverfahren dar und ist von allgemeiner Bekanntheit. Dabei wird ein dreidimensionales Werkstück, welche entsprechend der drei Raumrichtungen von sechs Seiten betrachtbar ist, mit einer dieser sechs Seiten an einem Werkstückträger befestigt, sodass die fünf verbleibenden Seiten für eine Bearbeitung frei zugänglich zur Verfügung stehen.

Unter einer 5-Achsenbearbeitung auf einer CNC-Bearbeitungsmaschine versteht man eine Bearbeitung eines Werkstückes, wobei die Verfahr- und Zerspanungsbewegungen von Werkstück und Werkzeug auf insgesamt 5 Freiheitsgrade begrenzt sind, jedoch alle 5 Bewegungsmöglichkeiten simultan erfolgen können. Bei Bearbeitungsvorgängen in einer CNC-Bearbeitungsmaschine sind diese Bewegungsmöglichkeiten die drei Lateralbewegungen des Werkzeuges sowie eine Schwenk- und eine Drehbewegung des Werkstückes auf dem Werkstückträger. Eine für die Bearbeitung erforderliche anhaltende Drehbewegung des Werkzeugs beispielsweise eines Fräskopfes oder eines Bohrers zählt hierbei nicht als eigener Freiheitsgrad.

Ferner ist unter dem Begriff der 3-Achsenbearbeitung ein Bearbeitungsvorgang bekannt, bei dem das Werkstück in einer CNC-Maschine fest eingespannt ist und das Werkzeug ausschließlich in drei laterale Richtungen bewegbar ist. Damit ist das Werkstück nur von einer Projektionsrichtung her bearbeitbar.

Zu den spanabhebenden Bearbeitungsverfahren zählt auch die Werkstückbearbeitung durch Hobeln, Stoßen oder Räumen, bei denen ein feststehendes Werkzeug mit einer (Hobeln, Stoßen) oder mehreren (Räumen) Schneiden ohne Richtungsänderung über die zu bearbeitende Werkstückoberfläche bewegt wird. Der spanabhebende Abtrag resultiert dabei aus der Zustellung des Werkzeuges normal zur Werkstoffoberfläche und der Relativbewegung zwischen Werkzeug und Werkstück tangential zur Werkstückoberfläche. Dabei muss die Schneide des Werkzeuges während des Schneidvorganges (Bearbeitungsschrittes) immer in Schneidenausrichtung bewegt werden, während bei der hierzu entgegengesetzten Rückzugbewegung des Werkzeuges die Schneide von der Werkstückoberfläche angehoben werden muss.

Ferner sind spezielle Stoß- und Räumverfahren bekannt, welche anstatt linear für eine Einarbeitung kreisförmiger Nuten und Strukturen in Oberflächen zirkular geführt sind. Dabei kommen einteilige oder mehrteilige Werkzeuge mit einer oder mehreren Schneiden zum Einsatz.

Ein weiteres artverwandtes Verfahren stellt das sog. Flycutting mit Profilwerkzeugen zur Erzeugung gerader Strukturen dar. Hierzu ist das Werkzeug vorzugsweise senkrecht zu einer als Werkzeugträger fungierenden Spindelachse an dieser befestigt, womit dieses Verfahren dem Umfang-Plan- oder Profilfräsen mit einem Einschneiden-Fräskopf sehr ähnelt.

Außerdem repräsentieren [1] und [2] jeweils mit Präzisionsfräsmaschinen Verfahren und Vorrichtungen, bei dem ein rotierendes Profilwerkzeug in einer Werkzeughalterung befestigt über eine Oberfläche eines Werkstückes geführt wird, wobei die Oberfläche des Werkstückes durch die Schneide bei Bewegung in Schneidenausrichtung spanabhebend bearbeitet wird.

Ein spezielles Verfahren oder eine Vorrichtung für die spanabhebende Bearbeitung eines Werkstückes durch Stoßen oder Räumen, bei dem die Schneidrichtung und die Ausrichtung der Schneide während eines Schnitts (Bearbeitungsschrittes) individuell einer Vorgabe folgend änderbar ist, ist bislang nicht bekannt.

Ausgehend davon hat die Erfindung zur Aufgabe, ein spanabhebendes Bearbeitungsverfahren zur Erzeugung gerader und gekrümmter Nuten und Strukturen auf planen und dreidimensionalen Oberflächen eines Werkstückes mit einem Schneidwerkzeug auf CNC-Bearbeitungsmaschinen zu entwickeln. Dabei darf das Werkstück in der Werkstückhalterung nicht umgespannt werden. Das Verfahren soll sich insbesondere für die Mikostrukturierung sowie zur Erzeugung von Taschenstrukturen mit scharfen Innenecken eignen.

Zur Lösung der Aufgabe schlägt die Erfindung die Merkmale vor, die in den Patentansprüchen 1 und 6 angeführt sind. Weitere, vorteilhafte und die Erfindung weiterbildende Merkmale sind in den kennzeichnenden Teilen der Unteransprüche zu sehen.

Zentrales Merkmal der Erfindung ist die Ausrüstung einer CNC-Bearbeitungsmaschine mit einer separaten drehbaren Aufnahme für ein Profilwerkzeug, welches durch diese um eine Achse drehbar gelagert ist. In einem Zerspanungsvorgang ähnlich der Bearbeitung durch Räumen oder Stoßen lässt sich das nicht rotierende Profilwerkzeug somit mit einer nicht geradlinigen Vorschubbewegung über eine Werkstückoberfläche führen, wobei die Schneide über die drehbare Lagerung immer in Richtung der aktuellen Schneidrichtung ausrichtbar ist.

Bei einem Einsatz in einer CNC-Bearbeitungsmaschine bietet es sich an, die Drehbewegung motorisch anzutreiben und diesen Antrieb für die drehbare Anordnung als ein aktives Stellelement im Bewegungsablaufsystem der CNC-Bearbeitungsmaschine zu integrieren. Hierzu ist eine spezielle Steuerung des Verfahrens vorzugsweise durch Programmierung eines Postprozessors für die Steuerung der CNC-Bearbeitungsmaschine erforderlich, die einerseits die maschinenunabhängigen Strukturdaten und Werkzeugpositionsdaten in maschinenspezifische NC-Programme umsetzt, zum anderen die Aufarbeitung der Bahnbewegungsdaten zur Ansteuerung der Drehbewegung des Werkzeugs durchführt. Letzteres kann Teil des Postprozessors sein, besonders im Falle einer zweidimensionalen Werkstückbearbeitung (z. B. 3-Achsen-Bearbeitung) aber auch unter Nutzung der vorhandenen NC-Daten durch eine externe Steuerung gelöst werden.

Für die Bearbeitung eines Werkstückes mit dem erfindungsgemäßen Verfahren auf einer CNC-Bearbeitungsmaschine für die 3-Achsen-Bearbeitung wird das Werkstück zunächst in der festen Werkstückaufnahme so fixiert, dass die zu bearbeitende Werkstückoberfläche vorzugsweise parallel zu den einstellbaren Schneidrichtungen des Profilwerkzeuges ausgerichtet ist. Die anschließende Bearbeitung, d. h. die spanabhebende Einarbeitung einer Struktur erfolgt durch laterales Verfahren und Zustellen des Profilwerkzeuges, wobei mit Hilfe der drehbare Aufnahme lediglich die Ausrichtung des Werkzeuges um die Drehachse auf die Verfahrrichtung anpassbar ist, das Werkzeug selbst nicht kippbar ist. Mit dieser Verfahrensvariante lassen sich daher nur ebene oder leicht geneigte Werkstückoberflächen bearbeiten oder strukturieren.

Soll jedoch ein Formkörper mit dem erfindungsgemäßen Verfahren von mehreren Seiten bearbeitet werden, ist die Bearbeitung auf einer CNC-Bearbeitungsmaschine für die 5-Achsen-Bearbeitung durchzuführen. Durch die Schwenk- und Drehbarkeit des Werkstückes auf der Werkstückhalterung wird eine 5-Seiten-Bearbeitung von Werkstücken möglich.

Bei einer weiteren Ausführungsform ist eine CNC-Bearbeitungsmaschine für die 3-Achsen-Bearbeitung ausgelegt, weist aber einen Werkstückträger in Form eines drehbaren und lateral bewegbaren Positioniertisches auf. Eine Kippung oder eine Schwenkung des Werkstückes um die lateralen Bewegungsachsen sowie eine drehbare Werkzeughalterung ist nicht vorgesehen. Der Positioniertisch ist in seinen drei Bewegungsfreiheitsgraden motorisch angetrieben und als aktive Stellelemente in den CNC-Steuerungsprozess ggf. unter Verwendung eines separaten Postprozessors integriert. Bei der Durchführung eines spanabhebenden Bearbeitungsschritts wird die Werkstückoberfläche mit dem Positioniertisch unter dem feststehenden Profilwerkzeug hinwegbewegt. Die Drehbewegung des Profilwerkzeugs relativ zum Werkstück, d. h. die Ausrichtung der Schneidfläche auf eine vorgegebene Schneidrichtung erfolgt dabei über eine Drehung der Werkstückoberfläche mit Positioniertisches anstelle einer Drehung des Profilwerkzeugs in der Werkzeughalterung. Durch eine gleichzeitig mit der Drehbewegung abgestimmte laterale Bewegung des Positioniertisches ist parallele Verschiebung der Drehachse, beispielsweise zum Profilwerkzeug hin möglich.

Das Profilwerkzeug besitzt dabei eine Schneidenkontur mit den üblichen Span- und Freiwinkeln. Der Freiwinkel begrenzt jedoch den realisierbaren Krümmungsradius der einzubringenden Nuten nach unten, weswegen für das vorliegende Verfahren Profilwerkzeuge mit großen Freiwinkeln vorzuziehen sind.

Zur Herstellung von Strukturen mit Nuten mit scharfen Innenecken bietet es sich vorzugsweise an, ein Profilwerkzeug mit mindestens zwei im Wesentlichen seitlich orientierten Schneiden unterschiedlicher Schneidrichtungen und Orientierung zu verwenden, wobei je nach Schneidrichtung jeweils nur eine Schneide den spanabhebenden Bearbeitungsschritt durchführt, während die anderen Schneiden nicht an diesem Bearbeitungsschritt beteiligt sind. Bei der konkreten Anwendung weist das Profilwerkzeug je eine links- und eine rechtsorientierte Schneide auf, welche jeweils abwechselnd spanabhebend in der schrittweise entstehenden Nut zu der Innenecke hin bewegt werden, wobei die Bewegung der jeweilig aktiven Schneide bei jedem Bearbeitungsschritt (Vorschub) bei Erreichen der gewünschten Endposition für die scharfe Innenecke beendet wird. Die Zustellung des Profilwerkzeugs gegenüber dem vorangegangenen Bearbeitungsschritt erfolgt zwischen den Teilschritten. Die Endkontur der Innenecke wird dann während der letzten beiden Bearbeitungsschritte erreicht.

Alternativ hierzu bietet sich für die beschriebene Aufgabe der Einsatz eines Profilwerkzeugs mit einer Schneidkante, welche im Wesentlichen bevorzugt parallel zur Werkstückoberfläche ausgerichtet ist, an, wobei die einzelnen spanabhebenden Bearbeitungsschritte jeweils in einer und derselben Richtung erfolgen und sich nur in der Zustellung, welche vorzugsweise senkrecht zu der Werkstückoberfläche erfolgt, unterscheiden.

### Literatur

[1] US 4.950.112
[2] Fünfachsiges Fräsen großer Werkstücke; ZWF Zeitschrift für wirtschaftliche Fertigung und Automatisierung; Carl Hanser Verlag, München, Band 86, Nr.5, 1. Mai 1991, S.220; XP000204783 ISSN: 0947-0085

## Patentansprüche

1. Verfahren zur spanabhebenden Bearbeitung von Werkstücken auf CNC-Bearbeitungsmaschinen, bei dem ein Profilwerkzeug mit einer Schneide in einer Werkzeughalterung befestigt über eine Oberfläche des Werkstückes geführt wird, wobei die Oberfläche des Werkstückes durch die Schneide bei Bewegung in Schneidenausrichtung spanabhebend bearbeitet wird,
**dadurch gekennzeichnet, dass**
das Profilwerkzeug nicht rotiert, eine nicht geradlinige Vorschubbewegung ausführt sowie in der Werkzeughalterung über eine drehbare Lagerung mit einer Schneide immer in Richtung einer aktuellen Schneidrichtung ausgerichtet wird.

2. Verfahren nach Anspruch 1, **dadurch gekennzeichnet, dass** das Profilwerkzeug in einer separaten drehbaren Aufnahme der Werkzeughalterung ausgerichtet wird.

3. Verfahren nach Anspruch 1 oder 2, **dadurch gekennzeichnet, dass** das Werkstück während der Bearbeitung auf einer Werkstückhalterung geschwenkt und/oder gekippt wird.

4. Verfahren nach einem der vorgenannten Ansprüche, **dadurch gekennzeichnet, dass** das Profilwerkzeug mehrere Schneiden aufweist, wobei je nach Schneidrichtung eines spanabhebenden Bearbeitungsschrittes alle oder jeweils nur ein Teil der Schneiden beteiligt ist, während die anderen Schneiden nicht an diesem Bearbeitungsschritt beteiligt sind.

5. Verfahren nach Anspruch 4, **dadurch gekennzeichnet, dass** Profilwerkzeug je eine links- und eine rechtsorientierte Schneide auf, die jeweils abwechselnd spanabhebend in einer schrittweise entstehenden Nut zu der Innenecke hin bewegt werden, wobei die Bewegung der jeweilig aktiven Schneide bei jedem Bearbeitungsschritt bei Erreichen der gewünschten Endposition für eine scharfe Innenecke beendet wird.

6. Vorrichtung zur Durchführung des Verfahrens nach einem der vorgenannten Ansprüche, bestehend aus einer CNC-Bearbeitungsmaschine mit einer drehbaren Werkzeughalterung, wobei diese mit einem Antrieb für die drehbare Anordnung des Profilwerkzeuges für eine Ausrichtung einer Schneide des Profilwerkzeugs immer in Richtung einer aktuellen Schneidrichtung als ein aktives Stellelement im Bewegungsablaufsystem der CNC-Bearbeitungsmaschine ausgerüstet ist.

7. Vorrichtung nach Anspruch 6, bestehend aus einer CNC-Bearbeitungsmaschine mit einer drehbaren und lateral verschiebbaren Werkstückhalterung für eine Schwenkung oder Kippung des Werkstücks, wobei die Antriebe für die drehbare und in zwei Richtungen lateral verschiebbare Werkstückhalterung als aktive Stellelemente im.Bewegungsablaufsystem der CNC-Bearbeitungsmaschine integriert sind.

8. Vorrichtung nach Anspruch 6 oder 7, **dadurch gekennzeichnet, dass** ein zusätzlicher Postprozessor für die Steuerung der Drehbewegung des Profilwerkzeuges oder der linearen Bewegungen und der Drehbewegungen des Werkstückes vorgesehen ist, der einerseits die maschinenunabhängigen Strukturdaten und Werkzeugpositionsdaten in maschinenspezifische NC-Programme umsetzt, zum anderen die Aufarbeitung der Bahnbewegungsdaten zur Ansteuerung der Drehbewegung des Werkzeugs durchführt.

## Claims

1. Process for the machining of workpieces using CNC machines, with a profiled tool with a blade being fixed in a tool holder and moved along the surface of the workpiece and this surface of the workpiece being machined by the blade in blade direction,
**characterized by**
the profiled tool not rotating, not making a straight, forward movement, and one tool blade always being oriented in a current cutting direction due to a rotating bearing of the tool.

2. Process according to Claim 1, **characterized by** the profiled tool being oriented in a separate, rotatable adapter of the tool holder.

3. Process according to Claim 1 or 2, **characterized by** the workpiece being turned and/or tilted on the holder during machining.

4. Process according to one of the claims mentioned above, **characterized by** the profiled tool having several blades and, depending on the cutting direction, all or only some of the blades being involved in the machining step, while the remaining blades are not involved in this machining step.

5. Process according to Claim 4, **characterized by** the profiled tool being equipped with a left and a right oriented blade each, which are moved alternately towards the inner corner in a groove that is cut in a stepwise manner, and with this movement of the active blade being completed when reaching the desired end position for a sharp inner corner.

6. System to execute the process according to one of the claims above, consisting of a CNC machine with a rotatable tool holder that is equipped with a drive for the rotatable arrangement of the profiled tool, such that a blade of the profiled tool always is oriented along the current cutting direction as an active control unit in the movement system of the CNC machine.

7. System according to Claim 6, consisting of a CNC machine with a rotating tool holder that can be shifted laterally for turning or tilting the workpiece, with the drives of the tool holder that can be rotated and shifted laterally in two directions being integrated as active control units in the movement system of the CNC machine.

8. System according to Claim 6 or 7, **characterized by** an additional post-processor being provided for the control of the rotating movement of the profiled tool or the linear and rotating movements of the workpiece, with this post-processor converting the machine-independent structural data and tool position data into machine-specific NC programs and processing the movement data to control the rotating movement of the tool.

## Revendications

1. Procédé d'usinage par enlèvement de copeaux de pièces à usiner sur des machines d'usinage commandées par ordinateur consistant à guider un outil de profilage, doté d'une arrête vive et fixé dans un porte-outil, sur la surface de la pièce à usiner, la surface de la pièce à usiner étant usinée par enlèvement de copeaux par l'arête vive lors de son déplacement dans le sens de coupe,
**caractérisé en ce que**
l'outil de profilage n'est pas rotatif, qu'il exécute un déplacement en avant non rectiligne et que, monté pivotant dans le porte-outil, ledit outil de profilage est toujours orienté avec une arête vive dans le sens de coupe actuel.

2. Procédé selon la revendication 1, **caractérisé en ce que** l'outil de profilage est aligné dans un logement séparé monté pivotant du porte-outil.

3. Procédé selon la revendication 1 ou 2, **caractérisé en ce que** la pièce à usiner bascule et/ou pivote sur un porte-piéce durant l'opération d'usinage.

4. Procédé selon l'une des revendications précédentes, **caractérisé en ce que** l'outil de profilage comporte une pluralité d'arêtes vives, étant entendu qu'en fonction du sens de coupe l'ensemble des arêtes vives ou une partie d'entre elles seulement participent à la séquence d'usinage par enlêvement de copeaux, les arêtes vives restantes n'étant pas sollicitées.

5. Procédé selon la revendication 4, **caractérisé en ce que** l'outil de profilage comporte à la fois une arête vive dirigée à gauche et une arête vive dirigée à droite se déplaçant à tour de rôle vers l'angle intérieur dans une rainure produite progressivement par enlèvement de copeaux, le mouvement de coupe de l'arête active étant terminé à chaque séquence d'usinage au moment où l'arête atteint la position définitive souhaitée d'un angle intérieur vif.

6. Dispositif permettant l'exécution du procédé selon l'une des revendications précédentes se composant d'une machine d'usinage commandé par ordinateur équipée d'un porte-outil monté pivotant, ledit porte-outil comportant, en tant que mécanisme de commande intervenant activement dans le système de déroulement du mouvement de coupe de la machine d'usinage commandée par ordinateur, un dispositif permettant l'entraînement de l'outil de profilage pour toujours orienter l'arête vive de l'outil de profilage dans le sens de coupe actuel.

7. Dispositif selon la revendication 6 se composant d'une machine d'usinage commandée par ordinateur dotée d'un porte-outil monté pivotant et pouvant être déplacé latéralement afin de permettre à la pièce à usiner de tourner ou de pivoter autour de son axe, les dispositifs d'entraînement du porte-outil monté pivotant et pouvant se déplacer latéralement dans deux sens étant intégrés dans la machine d'usinage commandé par ordinateur comme mécanisme de commande intervenant activement dans le déroulement du mouvement de coupe.

8. Dispositif selon la revendication 6 ou 7, **caractérisé en ce qu'**il comporte en plus un postprocesseur destiné à commander le mouvement de rotation de l'outil de profilage ou les déplacements linéaires et les mouvements rotatifs de la pièce à usiner, ledit postprocesseur assurant, d'une part, la conversion des données de structure topographique non-liées machine ainsi que les données de positionnement de l'outil de coupe en programmes machine à commande numérique et, d'autre part, le traitement des données de mouvement de course permettant de commander le mouvement de rotation de l'outil de profilage.
